Europäisches Patentamt

European Patent Office

Office européen des brevets

(19)

(11) Numéro de publication: **0 229 681
B1**

(12) **FASCICULE DE BREVET EUROPEEN**

(45) Date de publication du fascicule du brevet:
22.08.90

(21) Numéro de dépôt: **87200026.0**

(22) Date de dépôt: **09.01.87**

(51) Int. Cl.⁵: **E06B 9/68**, E06B 9/82

(54) Dispositif d'entraînement en rotation du tube d'enroulage d'un store à rouleau, volet roulant ou similaire.

(30) Priorité: **15.01.86 FR 8600494**

(43) Date de publication de la demande:
**22.07.87 Bulletin 87/30**

(45) Mention de la délivrance du brevet:
**22.08.90 Bulletin 90/34**

(84) Etats contractants désignés:
**DE ES FR IT NL SE**

(56) Documents cités:
**DE-A- 3 500 285
FR-A- 1 602 422
FR-A- 2 112 787
FR-A- 2 376 285
FR-A- 2 561 303**

(73) Titulaire: **SOMFY, 8, rue de Margencel,
F-74300 Cluses(FR)**

(72) Inventeur: **Evreux, Gérard, Les Coteaux, F-74130 Ayze
Bonneville(FR)**

(74) Mandataire: **Meylan, Robert Maurice et al, c/o BUGNION
S.A. 10, route de Florissant Case Postale 375,
CH-1211 Genève 12 - Champel(CH)**

## Description

La présente invention concerne un dispositif d'entraînement en rotation du tube d'enroulage d'un store à rouleau ou volet roulant, comportant un carter fixe extérieur au tube d'enroulage, un moteur électrique à carter tubulaire logé dans le tube d'enroulage, l'arbre du moteur étant relié cinématiquement en rotation au tube d'enroulage, un premier moyen pour immobiliser en rotation le carter pendant le fonctionnement du moteur, un second moyen pour immobiliser en rotation le tube d'enroulage par rapport audit carter tubulaire, lorsque le moteur ne fonctionne pas, un dispositif d'arrêt automatique, logé dans le carter fixe, pour couper l'alimentation du moteur après un certain nombre de tours de l'arbre du moteur, un mécanisme actionnable manuellement susceptible d'entraîner en rotation le carter tubulaire du moteur et par conséquent le tube d'enroulage et dont une partie est située dans le carter fixe, un connecteur tournant pour l'alimentation du moteur, quelle que soit la position angulaire de celui-ci, une liaison cinématique permanente, en rotation, étant assurée entre une bague tournante solidaire du tube d'enroulage et le dispositif d'arrêt automatique, sans passer par l'arbre du moteur.

Un tel dispositif est décrit dans le brevet français No 2 480 846. Dans ce dispositif connu, le premier moyen pour immobiliser en rotation le carter tubulaire pendant le fonctionnement du moteur est constitué par la partie du mécanisme actionnable manuellement située dans le carter fixe, qui constitue un réducteur irréversible et qui comprend à cet effet une vis sans fin coopérant avec une roue de vis sans fin dans le plateau de laquelle est pivoté un pignon engrenant avec la denture extérieure d'une bague tournante à dentures extérieure et intérieure, dont la denture intérieure engrène à son tour avec le pignon de sortie du dispositif d'arrêt logé dans le carter tubulaire du moteur. Lorsque le moteur tourne en entraînant le tube d'enroulement, la vis sans fin et la roue de vis sans fin sont immobiles et le tube d'enroulement entraîne le dispositif d'arrêt automatique par la denture d'une bague tournante solidaire du tube d'enroulement, denture qui engrène avec le pignon pivoté dans le plateau de la roue de vis sans fin qui entraîne le pignon de sortie du dispositif d'arrêt par l'intermédiaire de la bague tournante à dentures extérieure et intérieure. Un second dispositif réducteur irréversible permet d'entraîner manuellement le tube d'enroulement par le dispositif de secours sans dérégler les points d'arrêt du store à rouleau ou du volet roulant en position totalement enroulée ou totalement déroulée.

D'autres dispositifs de ce type sont décrits dans les brevets FR 2 493 906 et FR 2 376 285. Dans ces dispositifs le premier dispositif réducteur irréversible est également constitué par une vis sans fin et une roue de vis sans fin. Un tel réducteur irréversible à vis sans fin et roue de vis sans fin présente divers inconvénients : il est asymétrique, ce qui signifie qu'il ne peut pas être indifféremment installé d'un côté ou de l'autre d'une embrasure; la vis sans fin doit se trouver devant la roue de vis sans fin pour être accessible, ce qui peut rendre nécessaire une modification du carter. Il doit présenter une forte réduction afin d'assurer une irréversibilité totale, c'est-à-dire un blocage, lorsque le moteur tourne, ce qui nécessite un grand nombre de tours de manivelle pour entraîner le tube d'enroulage manuellement. Enfin, un tel mécanisme est coûteux, ce qui n'est pas un facteur négligeable pour de telles installations domestiques.

La présente invention a pour but de remplacer le mécanisme à vis sans fin et roue de vis sans fin par un mécanisme plus simple pouvant être réversible et pas obligatoirement réducteur.

A cet effet le dispositif d'entraînement selon l'invention est caractérisé en ce que ledit premier moyen pour immobiliser le carter tubulaire en rotation comprend un réducteur planétaire de type WOLFROM irréversible disposé à l'intérieur du carter tubulaire, dont la couronne de sortie est solidaire du carter tubulaire, dont la couronne fixe est solidaire du carter fixe et dont le planétaire présente un prolongement axial s'étendant à l'intérieur du carter fixe et à l'extérieur du carter tubulaire et présentant des moyens d'accouplement à un moyen de manoeuvre.

L'utilisation d'un réducteur panétaire de WOLFROM, particulièrement compact, permet de loger ce réducteur dans le carter tubulaire. Etant donné que la liaison entre le moyen de manoeuvre et le planétaire de ce réducteur de WOLFROM n'a pas besoin d'être irréversible, cette liaison peut être réalisée par des moyens simples et peu coûteux tels que deux dentures coniques, une denture plane et une denture cylindrique ou une simple chaîne coopérant avec une denture formée sur le prolongement du planétaire. De telles dentures n'ont pas besoin d'être réalisées avec une grande précision. Pour la même raison le facteur de réduction entre l'organe de manoeuvre et le planétaire ne joue plus aucun rôle, de telle sorte que la réduction totale entre l'organe de manoeuvre et le tube d'enroulage peut être réduit, ce qui permet d'entraîner manuellement plus rapidement le tube d'enroulage.

Le dessin annexé représente, à titre d'exemple, une forme d'exécution du dispositif selon l'invention.

La figure 1 est une vue schématique d'un tube d'enroulage et de son système d'entraînement destinée à rappeler le principe de fonctionnement d'un tel tube d'enroulage, vue dans laquelle le tube d'enroulage et le carter tournant sont représentés en coupe.

La figure 2 est une vue partielle en coupe du dispositif d'entraînement selon l'invention selon une première forme d'exécution.

La figure 3 est une vue analogue à la figure 2 d'une variante d'exécution.

Le dispositif selon l'invention, comme les dispositifs antérieurs, est destiné à entraîner un tube d'enroulage 1 sur lequel s'enroule un store à rouleau, un volet roulant ou similaire. Ce tube d'enroulage 1 est monté par exemple dans une embrasure 2 de fenêtre entre un carter fixe 3 et une plaque 4 dans laquelle un flasque d'extrémité 5 du tube d'enroulage 1 est pivoté au moyen d'un tourillon 6. A l'intérieur du tube d'enroulage 1 et concentriquement à celui-ci est disposé un carter tubulaire 7 solidaire du carter fixe 3 et dans lequel est monté un moteur électrique 8 alimenté par l'intermédiaire d'un connecteur tournant 9 et entraînant un réducteur réversible 10 dont l'arbre de sortie entraîne le tube d'enroulage 1 par l'intermédiaire d'un disque 12 solidaire du tube d'enroulage 1. Entre le moteur 8 et le réducteur 10 est en outre disposé un frein 13 agissant par manque de courant. Près du carter fixe 3, le tube d'enroulage 1 est muni d'une bague tournante 14 susceptible de tourner autour du carter tubulaire 7 et destinée à entraîner un dispositif d'arrêt automatique 15. Le carter tubulaire 7 est cinématiquement relié à un dispositif réducteur irréversible 16 logé dans le carter fixe 3. Pendant le fonctionnement du moteur 8, le carter tubulaire 7 est empêché de tourner par le dispositif réducteur irréversible 16 et l'arbre 11 entraîne le tube d'enroulage 1 en rotation. En cas de panne de moteur le carter tubulaire 7 peut être entraîné en rotation manuellement par l'intermédiaire du réducteur irréversible 16, le réducteur 10, rendu irréversible sous l'action du frein 13, assurant l'entraînement en rotation de l'arbre 11 et par conséquent du tube d'enroulage 1, ceci sans dérégler les points d'arrêt automatiques déterminés par le dispositif d'arrêt automatique 15. Dans ce cas le stator du moteur 8 est entraîné en rotation avec le carter tubulaire 7, la liaison électrique étant maintenue par le collecteur tournant 9.

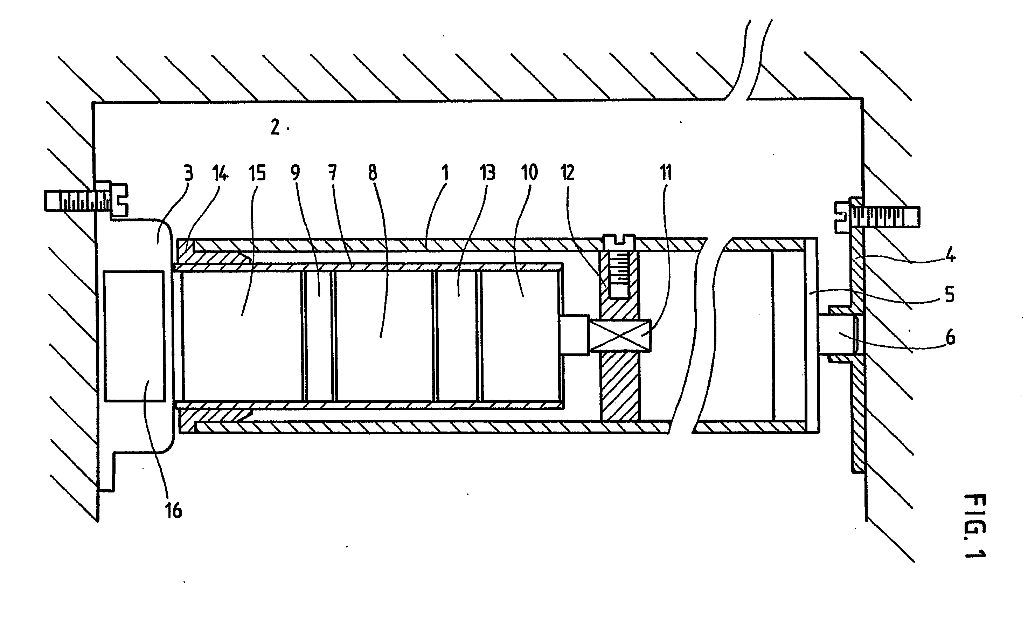

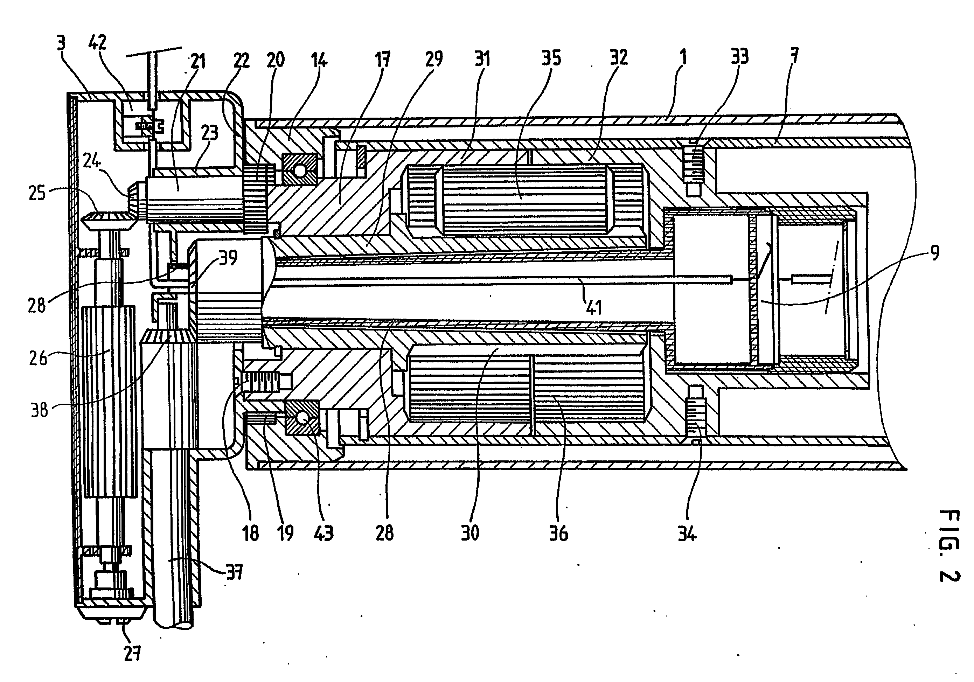

Dans la forme d'exécution principale de l'invention telle que représentée à la figure 2, dans laquelle les éléments principaux et connus ont été désignés par les mêmes références que dans la figure 1 pour faciliter la compréhension du dessin, la bague tournante 14 du tube d'enroulage 1, solidaire en rotation du tube d'enroulage, est montée tournante, au moyen d'un roulement à billes 43, sur un bâti tubulaire 17 fixé au carter fixe 3 au moyen de vis 18. Cette bague tournante 14 est munie d'une denture intérieure 19 engrenant avec un pignon 20 usiné sur un arbre court 21 traversant la paroi mitoyenne 22 du carter fixe 3 à travers un palier tubulaire 23 et dont l'extrémité débouchant à l'intérieur du carter fixe 3 est munie d'une denture conique 24 engrenant avec un pignon cônique 25 fixé sur l'axe d'un dispositif d'arrêt automatique 26, dispositif constitué par exemple par le dispositif décrit dans le brevet FR 2 457 370. Ce dispositif d'arrêt automatique 26 a par conséquent son axe orienté perpendiculairement à l'axe du tube d'enroulage 1. Dans le plan vertical il est dès lors possible d'orienter le dispositif d'arrêt automatique 26 dans n'importe quelle direction, en particulier dans une direction telle qu'il est facilement accessible pour son réglage au moyen d'une vis 27, après la mise en place complète du dispositif d'entraînement.

Le centre du carter tubulaire 7 est occupé par un bâti tubulaire cônique 28 fixe en rotation, de préférence en matière synthétique. Ce bâti tubulaire 28 est traversé par les câbles d'alimentation 41, 42 du moteur 8 et supporte la partie fixe du connecteur tournant 9. Autour de ce bâti tubulaire cônique 28 est monté un arbre creux 29 monté rotativement dans le bâti fixe tubulaire 17. Sur une partie de sa longueur, cet arbre tubulaire 29 est muni d'une denture constituant le planétaire d'un réducteur de WOLFROM. La couronne fixe 31 de ce réducteur de WOLFROM est usinée directement dans le bâti fixe 17, tandis que la couronne tournante de sortie 32 du réducteur de WOLFROM est fixée à la paroi intérieure du carter tubulaire 7 au moyen de vis 33 et 34. Des satellites allongés 35 et 36 engrènent d'une part avec la denture 30 du planétaire et d'autre part avec les dentures des couronnes 31 et 32.

Ce réducteur de WOLFROM est rendu irréversible selon une méthode connue en soi consistant en une exécution différente des dentures des couronnes 31 et 32. L'irréversibilité de ce réducteur signifie qu'il n'est pas possible de l'entraîner en rotation par l'entraînement de sa couronne de sortie 32, c'est-à-dire par l'entraînement du carter tubulaire 7, de sorte que lorsque le moteur électrique fonctionne, le bâti de ce moteur est retenu en rotation. Par contre, lorsqu'on entraîne l'arbre tubulaire 29 constituant le planétaire du réducteur de WOLFROM, celui-ci entraîne les satellites 35 et 36 en rotation et ceux-ci entraînent la couronne de sortie 32 en roulant à l'intérieur de la couronne fixe 31. Le carter tubulaire 7, monté libre en rotation sur le bâti fixe 17 et solidaire de la couronne de sortie 32, est entraîné avec cette couronne 32, ce qui a pour effet d'entraîner le tube d'enroulage 1 par le disque 12 en raison de la présence du mécanisme réducteur réversible 10 (figure 1) rendu irréversible sous l'action du frein 13 lorsque le moteur ne fonctionne pas.

Il est dès lors sans autre possible, lorsque le moteur ne fonctionne pas, d'entraîner manuellement le tube d'enroulage 1 en entraînant l'arbre creux 29 par un moyen quelconque en particulier un moyen d'entraînement n'ayant aucun effet de blocage lorsqu'il n'est pas utilisé. Dans l'exemple représenté à la figure 2, cet entraînement est réalisé au moyen d'une arbre 37 supporté par le carter fixe 3 et muni d'une manivelle, dont l'extrémité est munie d'une denture cônique 38 engrenant avec une denture cônique 39 prévue à l'extrémité correspondante de l'arbre creux 29.

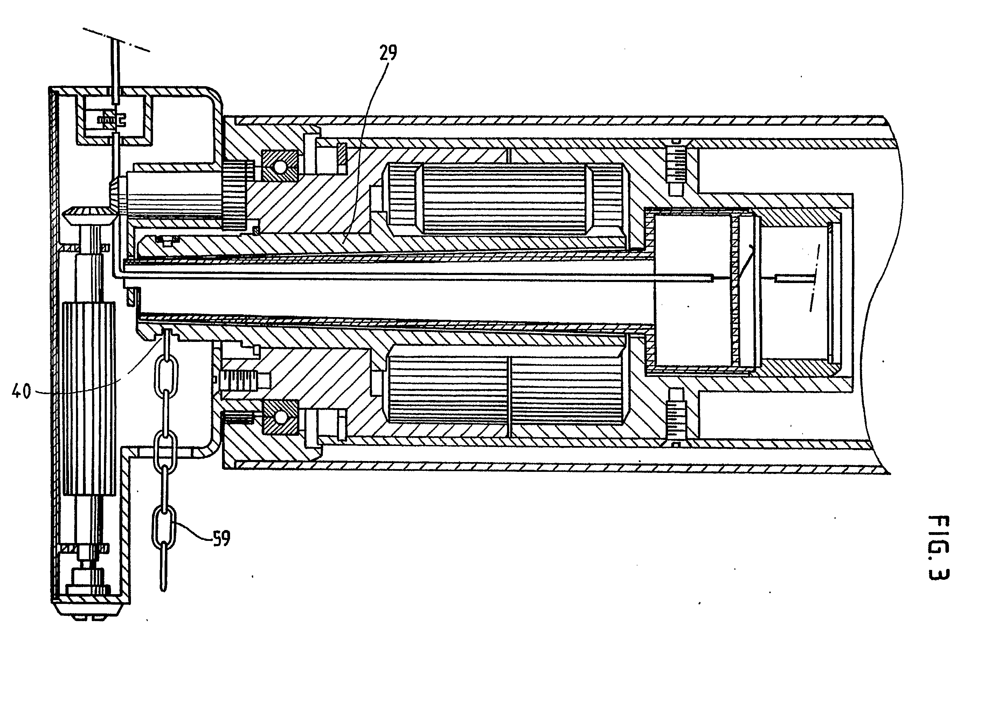

Dans l'exemple représenté à la figure 3, l'entraînement manuel est réalisé encore plus simplement par une chaîne 59, coopérant avec une denture 40 prévue sur l'arbre creux 29. Tous les autres éléments de la figure 3 sont identiques à ceux de la figure 2.

On constate qu'aussi bien l'axe de la manivelle 37 que l'axe symétrique de la chaîne 59 sont coplanaires avec l'axe du dispositif d'entraînement et du tube d'enroulage et qu'il en est de même de l'axe du dispositif d'arrêt automatique 26. Le dispositif d'entraînement peut par conséquent être indifféremment installé d'un côté ou de l'autre de l'embrasure dans laquelle doit être installé le store ou volet roulant, sans poser de problème de logement ou d'accessibilité.

**Revendications**

1. Dispositif d'entraînement en rotation du tube d'enroulage (1) d'un store à rouleau ou volet roulant, comportant un carter fixe (3) extérieur au tube d'enroulage, un moteur électrique (8) à carter tubulaire (7) logé dans le tube d'enroulage, l'arbre (11) du moteur étant relié cinématiquement en rotation au tube d'enroulage, un premier moyen pour immobiliser en rotation le carter tubulaire (7) pendant le fonctionnement du moteur, un second moyen (10) pour immobiliser en rotation le tube d'enroulage (1) par rapport au carter tubulaire (7), lorsque le moteur ne fonctionne pas, un dispositif d'arrêt automatique (26), logé dans le carter fixe, pour couper l'alimentation du moteur après un certain nombre de tours de l'arbre du moteur, un mécanisme actionnable manuellement susceptible d'entraîner en rotation le carter tubulaire du moteur et par conséquent le tube d'enroulage et dont une partie (37, 39) est située dans le carter fixe, un connecteur tournant (9) pour l'alimentation du moteur, quelle que soit la position angulaire du carter de celui-ci, une liaison cinématique permanente, en rotation, étant assurée entre une bague tournante (14) solidaire du tube d'enroulage et le dispositif d'arrêt automatique (26), sans passer par l'arbre du moteur, caractérisé en ce que ledit premier moyen pour immobiliser le carter tubulaire (7) en rotation comprend un réducteur planétaire de type WOLFROM irréversible disposé à l'intérieur du carter tubulaire (7), dont la couronne de sortie (32) est solidaire du carter tubulaire (7), dont la couronne fixe (31) est solidaire du carter fixe (3) et dont le planétaire (29) présente un prolongement axial s'étendant à l'intérieur du carter fixe (3) et à l'extérieur du carter tubulaire (7) et présentant des moyens d'accouplements (39; 40) à un moyen de manoeuvre (37; 59).

2. Dispositif d'entraînement selon la revendication 1, caractérisé en ce que l'extrémité dudit prolongement axial du planétaire (29) est munie d'une denture conique (39) coopérant avec une denture conique (38) de l'extrémité d'une manivelle (37).

3. Dispositif d'entraînement selon la revendication 1, caractérisée en ce que ledit prolongement axial du planétaire (29) est munie d'une denture périphérique coopérant avec une chaîne (39).

## Claims

1. Drive device for rotating the winding tube (1) of a roller-blind or roller-shutter, having a fixed casing (3), outside the winding tube, an electric motor (8) with a tubular casing (7) housed in the winding tube, the shaft (11) of the motor being connected kinematically in rotation with the winding tube, a first means for immobilizing the tubular casing (7) in rotation during the functioning of the motor, a second means (10) for immobilizing the winding tube (1) in rotation relative to the tubular casing (7) when the motor is not functioning, an automatic stop device (26), housed in the fixed casing, for cutting off the power supply to the motor after a certain number of rotations of the shaft of the motor, a manually actuable mechanism capable of driving the tubular casing of the motor, and consequently the winding tube, in rotation, and one part (37, 39) of which is situated in the fixed casing, a rotating connector (9) for supplying power to the motor, independent of the angular position of the casing of the latter, kinematic link which is permanent being ensured in rotation between a rotating ring (14) integral with the winding tube and the automatic stop device (26) without passing through the shaft of the motor, characterized in that the said first means for immobilizing the tubular casing (7) in rotation comprises a planetary reducing gear of the irreversible WOLFROM type arranged inside the tubular casing (7) and the driven ring gear (32) of which is integral with the tubular casing (7), the fixed ring gear (31) of which is integral with the fixed casing (3) and the planetary gear (29) of which has an axial extension running inside the fixed casing (3) and outside the tubular casing (7) and having means (39; 40) for coupling to an operating means (37; 59).

2. Drive device according to Claim 1, characterized in that the end of the said axial extension of the planetary gear (29) is provided with a conical toothing (39) interacting with a conical toothing (38) of the end of a crank (37).

3. Drive device according to Claim 1, characterized in that the said axial extension of the planetary gear (29) is provided with a peripheral toothing interacting with a chain (59).

## Patentansprüche

1. Vorrichtung zum Drehantrieb des Aufrollrohres (1) einer Rolljalousie oder eines Rolladens mit einem ausserhalb des Aufrollrohres angeordneten, festen Gehäuse (3), einem Elektromotor (8) mit rohrförmigem Gehäuse (7), welches im Aufrollrohr untergebracht ist, wobei die Motorwelle (11) kinematisch drehfest mit dem Aufrollrohr verbunden ist, mit einem ersten Mittel zum Festhalten des rohrförmigen Gehäuses (7) gegenüber einer Drehung während des Betriebs des Motors, mit einem zweiten Mittel (10) zum Festhalten des Aufrollrohrs (1) gegenüber einer Drehung in Bezug auf das rohrförmige Gehäuse (7), wenn der Motor nicht funktioniert, mit einer automatischen Haltevorrichtung (26), die im festen Gehäuse untergebracht ist, um die Speisung des Motors nach einer bestimmten Anzahl von Umdrehungen der Motorwelle abzuschalten, mit einem von Hand betätigbaren Mechanismus, der das rohrförmige Gehäuse des Motors und folglich das Aufrollrohr in Drehung zu setzen erlaubt und von welchem ein Teil (37, 39) im festen Gehäuse angeordnet ist, mit einem Drehschalter (9) zum Speisen des Motors, unabhängig von der Winkelstellung seines Gehäuses, wobei eine ständige kinematische drehfeste Verbindung zwischen einem drehbaren Ring (14), der fest mit dem Aufrollrohr verbunden ist, und der automatischen Haltevorrichtung (26) gewährleistet ist, ohne über die Motorwelle zu verlaufen, dadurch gekennzeichnet, dass das erste Mittel zum Festhalten des rohrförmigen Gehäuses (7) gegenüber einer Drehung ein im Innern des rohrförmigen Gehäuses (7) angeordnetes, nicht umkehrbares Planeten-Untersetzungsgetriebe vom WOLFROM-Typ aufweist, dessen Ausgangs-Hohlrad (32) am rohrförmigen Gehäuse (7) befestigt ist, dessen festes Hohlrad (31) am festen Gehäuse (3) befestigt ist und dessen Zentralrad (29) eine axiale Verlängerung aufweist, die sich ins Innere des festen Gehäuses (3) und ausserhalb des rohrförmigen Gehäuses (7) erstreckt und Mittel zum Ankuppeln (39; 47) an ein Bedienungsmittel (37; 59) aufweist.

2. Vorrichtung zum Drehantrieb nach Anspruch 1, dadurch gekennzeichnet, dass das Ende der erwähnten axialen Verlängerung des Zentralrades (29) mit einer Kegelverzahnung (39) versehen ist, die mit einer Kegelverzahnung (38) des Endes einer Handkurbel (37) zusammenwirkt.

3. Vorrichtung zum Drehantrieb nach Anspruch 1, dadurch gekennzeichnet, dass die erwähnte axiale Verlängerung des Zentralrades (39) mit einer Umfangsverzahnung versehen ist, die mit einer Kette (39) zusammenwirkt.

FIG. 1

FIG. 2

FIG. 3

EP 0 229 681 B1